# EUROPEAN PATENT SPECIFICATION

(11) **EP 1 594 635 B1**
(45) Date of publication and mention of the grant of the patent: **24.11.2010**
(21) Application number: 04704426.8
(22) Date of filing: 22.01.2004
(51) Int. Cl.: B09B 3/00, C04B 28/02, C04B 18/08

(54) **SYSTEM AND METHOD FOR TREATING FLY ASH**
SYSTEM UND VERFAHREN ZUR BEHANDLUNG VON FLUGASCHE
SYSTEME ET PROCEDE POUR TRAITER DES CENDRES VOLANTES

(30) Priority: 24.01.2003 US 442048 P; 06.05.2003 US 430744
(43) Date of publication of application: 16.11.2005
(73) Proprietor: Boral Material Technologies Inc., San Antonio, TX 78216 (US)
(72) Inventor: TARDIF, Marc-André, Atlanta, GA 30315 (US); MAJORS, Russ, K., San Marcos, TX 78666 (US); HILL, Russell, L., San Antonio, TX 78247 (US)
(74) Representative: Jones, Helen M.M.
(86) International application number: PCT/US2004/001688
(87) International publication number: WO 2004/067198

(56) References cited:
- EP-A- 0 683 140
- WO-A-01/09055
- DE-A- 10 109 903
- US-A- 5 161 470
- US-A- 5 351 630
- US-A- 5 390 611
- PATENT ABSTRACTS OF JAPAN vol. 1997, no. 04, 30 April 1997 (1997-04-30) & JP 8 337449 A (CHUGOKU ELECTRIC POWER CO INC:THE; CHIYUUDEN KANKYO TECHNOS KK; KAWASA), 24 December 1996 (1996-12-24)

## Description

### BACKGROUND OF THE INVENTION

The invention is generally related to a method and apparatus for combining the particulate components of fly ash with a treating fluid. Particularly, the invention provides the controlled addition of a fluid treating material to a bulk fly ash material.

Fly ash is a fine, glass-powder recovered from the gases of burning coal during the production of electricity. The micron-sized fly ash particles consist primarily of silica, alumina, and iron, and may contain various other oxides and residual carbon.

Fly ash has a number of uses as an additive for different materials. For instance, when mixed with lime and water the fly ash forms a cementitious composition with properties very similar to that of Portland cement. Because of this similarity, fly ash can be used to replace a portion of cement in concrete. Also, because fly ash consists of very small particulates, the ash may advantageously be used as a filler in plastics.

In the formation of concrete, it is often advantageous to add a surfactant, commonly referred to as air entraining admixtures, to the concrete in order to stabilize air voids in sufficient volumes and with the proper bubble distribution and spatial orientation to provide protection against freezing and thawing cycles. The manner in which air voids are distributed is critical to the freeze-thaw resistance of concrete. Surfactants are added to the concrete mixtures in order to reduce surface tension of the water to stabilize the air void system and to otherwise regulate the amount of air entrainment during the mixing and placement of the concrete.

Though fly ash provides favorable cement characteristics when added to concrete, the fly ash, or more specifically fly ash carbon (often indexed by loss on ignition) can have a detrimental impact on air entrainment in concrete. The primary issue being related to the potential for fly ash carbon to adsorb organic materials such as chemical air entraining admixtures, thus effectively reducing the surfactant concentration and therefore the entrained air void volume. Variation in fly ash carbon have a particularily detrimental effect because of the difficulty in determining a correct dosage of chemical air entraining admixture for a specified air volume as the carbon content fluctuates.

For use in plastics, the fly ash may be coated with coatings, such as coupling agents or surface modifying materials, that improve the physical properties of the ash for use as a filler. In addition, the fly ash may be treated with other agents as necessary for the particular use.

Fly ash may be treated with one or more compounds that improve the chemical or physical properties of the fly ash prior to mixing with concrete, plastic, or other material. If the fly ash is treated with a liquid compound, then the effectiveness of such treatment is at least partially dependent upon the dispersion of the treating liquid within the bulk ash material. The micron-sized particles of the fly ash present special problems in mixing the ash with the treating liquids. The small particle size makes it difficult to disperse the treating liquid among the particles. Combination of the treating liquid and ash in a tumbler or similar mixing device is somewhat ineffective due to clumping of the fly ash material. More complex mixing devices provide adequate mixing, but at added capital expense.

DE10109903 discloses a method of wetting fly ash by a two-stage wetting process wherein a first dose of water is added to a stream of fly ash at a first point, the fly ash is allowed to react with the water for a predetermined time, and a second dose of water is thereafter added to the fly ash.

It is desired to provide an improved method and system for treating fly ash that overcomes the difficulty of mixing a liquid treating agent with the bulk fly ash. It is further desired to provide a method and system for producing uniform fly ash that does not require large changes in current methods of producing and handling fly ash, such that capital expense associated with implementation of the method is minimized.

### BRIEF SUMMARY OF THE INVENTION

The invented method and system provides an improved manner of combining fly ash and a liquid such that the liquid is well dispersed within the fly ash and available to react with the fly ash or to coat the fly ash particles. The invention accomplishes this combination by evenly dispersing a treating fluid comprising a sacrificial agent into a flowing stream of fly ash. By dispersing the treating fluid into the fly ash as the fly ash is flowing, the method takes advantage of natural mixing and particle motion that occurs during flow of the bulk solid. Further, when the fly ash freely flows, either by gravitational free fall or pneumatic conveyance, the fly ash exhibits flow characteristics of a fluid. Treatment of the fly ash when fluidized further improves the mixing and interaction of the treating fluid with the ash.

According to one embodiment of the invention, mixing fly ash with a treating fluid is set out in claim 1.

According to another embodiment of the invention, the fly ash treatment system of claim 15 is a stand alone system that is attachable to a preexisting fly ash storage system. A typical preexisting fly ash storage system has a silo with a silo discharge and a silo discharge valve, a container loading station positioned under the silo discharge, and a scale for weighing the container. The system for attachment to the silo station includes a treating fluid supply comprising a sacrificial agent, such as a tank, a treating fluid supply line leading from the treating fluid supply, a device or apparatus for pressurizing the treating fluid, and a nozzle at the end of the treating fluid supply line opposing the fluid supply for receiving fluid and dispersing the fluid. The system also includes an automated controller with multiple inputs and outputs, with at least one output operatively connected to the pressurizing device for control of the treating fluid flow rate. The system may be easily installed upon the silo station by positioning the nozzle of the system within the wall of the silo discharge, operatively connecting the silo discharge valve to an output of the controller, and operatively connecting the scale, perhaps through a scale indicator, to an input of the controller.

The installed system is automated by the controller. Once the discharge valve is opened to begin the flow of fly ash, the controller activates the pressurizing device to supply treating fluid to the fly ash as the fly ash travels through the silo discharge and into the container, such as a truck or railcar. By monitoring the scale, the controller continuously monitors the flow rate of the fly ash. The controller adjusts the pressurization of the treating fluid according to preprogrammed parameters to maintain a treating fluid flow in proportion to the flow rate of fly ash. When the container nears its maximum capacity, the controller closes the silo discharge valve and stops flow of the treating fluid.

Several advantages are obtained by treating the fly ash while flowing through a silo discharge or other conduit already necessary in the transfer of fly ash. Only minimal modifications need to be made to previously existing silos in order to convert the silos into treating stations. By disposing the fluid discharge nozzles within the silo discharge, and making a few electrical connections between the controller of the system and the operating controls of the silo, the system is easily installed.

The system is a economical system that may be added to preexisting silos without the need for additional capital equipment or expensive modifications to existing equipment.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
Figure 1 is a diagram of a conduit containing a flow of fly ash and treating fluid being dispersed into the flow of fly ash in accordance with an embodiment of the invention;
Figure 2 is a process outline of a fly ash treatment system;
Figure 3 is a process outline of an automated fly ash treatment system;
Figure 4 is a process outline of a fly ash treatment system incorporating a mobile container in accordance with the invention;
Figure 5 is a process outline of an automated fly ash treatment system having a dual component treating fluid in accordance with another embodiment of the invention; and
Figure 6 is a process outline of an automated fly ash treatment system that is readily attachable to a preexisting silo storage system.

### DETAILED DESCRIPTION OF THE INVENTION

The present invention now will be described more fully hereinafter with reference to the accompanying drawings, in which some, but not all embodiments of the invention are shown. Indeed, these invention may be embodied in many different forms and should not be construed as limited to the embodiments set forth herein; rather, these embodiments are provided so that this disclosure will satisfy applicable legal requirements. Like numbers refer to like elements throughout.

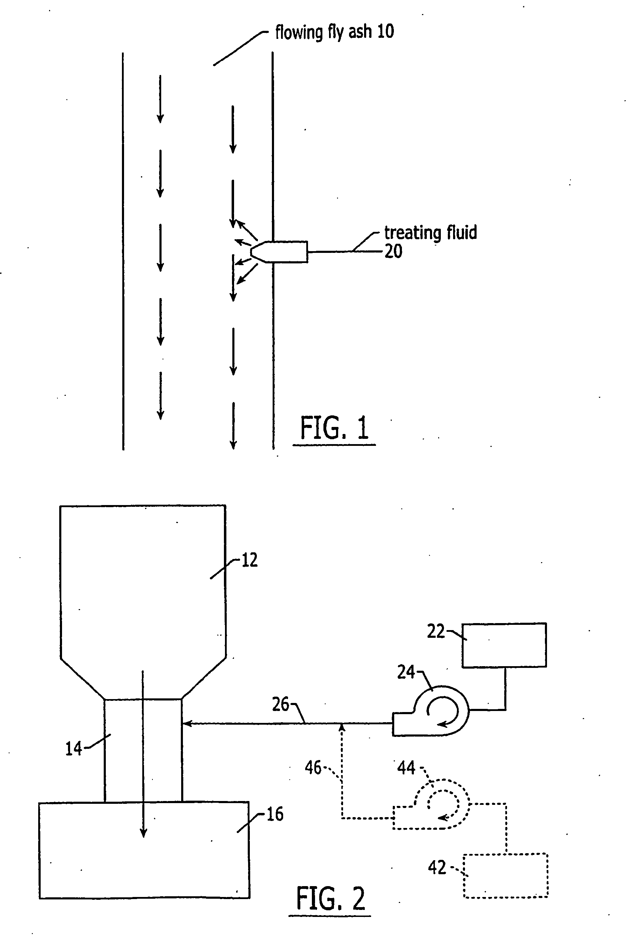

Referring to Figure 1, the invented system and method supplies a stream of treating fluid 20 and disperses the treating fluid 20 into a stream of flowing fly ash 10 in order to intimately mix the fly ash and treating fluid, thereby allowing the treating fluid 20 to coat the fly ash 10 or to better react with components of the fly ash 10. Freely flowing fly ash flows in a fluid-like state and is readily mixed with material introduced into the flowing stream. By introducing the treating fluid 20 into the fluid-like flow of the fly ash, the treating fluid 20 is well dispersed in the fly ash without the difficulty associated with previous methods of mixing a bulk solid.

The fly ash 10 is any fine ash product produced by combustion of powdered coal. The fly ash is a mixture of alumina, silica, unburned carbon, and various metallic oxides, which may include oxides of iron, calcium, magnesium, potassium, sodium, sulfur, and titanium. The fly ash may be but is not limited to Class C fly ash or Class F fly ash. The fly ash may contain unburned carbon content (LOI) from 0.1 wt% to 10.0 wt%, and typically from 0.1 wt% to 6.0 wt%, depending upon the carbon content of the original coal, the method in which the coal was combusted, and any post-combustion treatment of the fly ash.

The treating fluid 20 comprises a sacrificial agent and can be a liquid or mixture of liquids including solutions or mixtures of solutions that may advantageously be interspersed within a flowing fly ash stream for purposes of either reacting with a component of the fly ash or being deposited upon the surface of the fly ash particles. The system and method are broadly applicable to a range of possible treating fluids.

The fly ash is mixed with the treating fluid when the fly ash is in a state of fluid flow. Fluid-like flow is achieved either by allowing freefall of the fly ash from one container to a second container having a height lower than the first, or by use of a pneumatic air slide device, known in the art. The air slide typically moves fly ash in a horizontal or downward-sloped direction, but could be used to transport fly ash in any direction while maintaining the fluid-like flow.

Preferring to Figure 2, there is described a system for introducing a stream of treating fluid into a flowing stream of fly ash. During freefall from one vessel 12 to a second vessel 16 through a fly ash conduit 14, fly ash exhibits fluid flow. The second vessel 16 is preferably a mobile container such as a truck trailer or railcar used for the transportation of the treated fly ash. Alternatively, the second vessel 16 is an intermediate storage vessel and the treated fly ash may subsequently be transferred to a mobile vessel by gravity flow, air-slide, screw feeder, rotary vane valve, etc.

The treating fluid comprising a sacrificial agent is supplied under pressure and is well dispersed within the fly ash by a nozzle. A supply of treating fluid 22 is fed by a pressurizing apparatus 24 which pressurizes the treating fluid and supplies the treating fluid, under pressure, via treating fluid feed line 26 to the fly ash conduit 14. The treating fluid is preferably introduced into conduit 14 through a nozzle such that the treating fluid is well dispersed into the conduit 14.

As used herein, the phrase "pressurizing apparatus" generally describes any device or apparatus capable of moving a fluid from one location to another through the means of displacement, centrifugal force, electromagnetic force, transfer of momentum, or mechanical impulse. A preferred pressurizing apparatus is a metering pump that receives fluid from a supply of treating fluid 22 and feeds the fluid feed line 26. The use of a metering pump allows the flow rate of the treating fluid to easily be adjusted by adjusting the pump speed. For convenience, the metering pump is used as the exemplary pump in the embodiments discussed below, though each of the embodiments allow the use of pressurization devices in general. Another preferred pumping arrangement is the provision of pressurized air to a fluid supply vessel 22 that forces fluid from the vessel 22 under pressure through the fluid feed line 26.

Of course, multiple supplies and pressurizing apparatuses may be used to provide a number of treating fluids to the conduit 14. As shown, a second treating fluid may be added to the system by providing a supply of the second treating fluid 42 by a pressurizing apparatus 44, thereby providing a pressurized second treating fluid stream 46 to the treating fluid feed line 26.

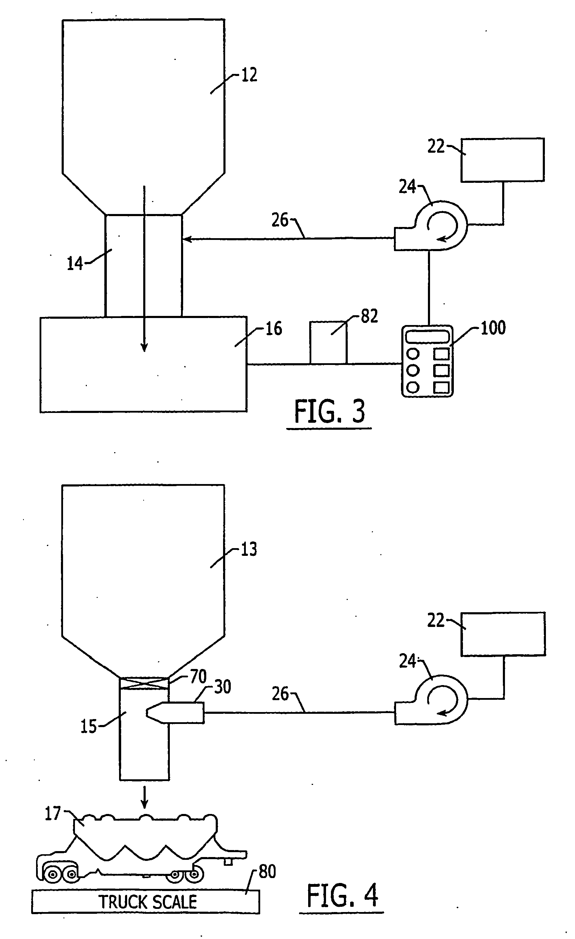

Referring to Figure 3, there is described a system for introducing a stream of treating fluid 26 into a flowing stream of fly ash, wherein the flow rate of fly ash is monitored and the flow rate of the treating fluid is adjusted accordingly. In general, the fly ash freefalls from one vessel 12 to a second vessel 16 through a fly ash conduit 14, and exhibits fluid flow. The treating fluid is supplied under pressure and is introduced into the fly ash by a nozzle.

The supply of treating fluid 22 feeds a pump 24 which pressurizes the treating fluid and supplies the treating fluid, under pressure, via treating fluid feed line 26 to the fly ash conduit 14. A controller 100 is operatively connected to a flow rate measuring device 82 which is capable of measuring the flow rate of fly ash being added to the second vessel 16. Based upon the measured fly ash flow rate, the controller 100 automatically adjusts the speed of the pump 24 to supply treating fluid to the fly ash at a predetermined ratio with respect to the flow rate of fly ash.

Referring to Figure 4, an embodiment of the invention is shown in relation to a fly ash storage silo 13 positioned for discharge into a mobile container 17, such as a rail car or truck trailer. In order to transport fly ash, fly ash in the storage silo 13 is released through the silo discharge 15 into the mobile container 17. The discharge 15 may be gravity fed or may be pneumatically assisted. In either case, the fly ash achieves a fluid-like state as it moves through the silo discharge 15.

To begin flow of the fly ash, a silo discharge valve 70, in line with the silo discharge 15, is opened. A supply of treating fluid 22 feeds a treating fluid supply pump 24, which supplies treating fluid under pressure to a discharge nozzle 30. The flow rate of treating fluid is primarily determined by the speed of the pump 24. The speed of the pump 24 is calibrated such that the total supply of treating fluid corresponds to the rate of flow of the fly ash. The average flow rate of fly ash may be determined by prior experimentation, or may be calculated in real time with a flow rate meter. According to one embodiment, the mobile container 17 is placed on a scale 80. By using a scale 80 during transfer of the fly ash from the silo 13 to a mobile container 17, the flow rate of fly ash may easily be determined while the fly ash is flowing.

When the fly ash is flowing and the treating fluid is being dispersed into the fly ash, the subsystem comprising the discharge 15 may be viewed as a continuous or quasi-continuous system in which the treating fluid is introduced to and combined with the flowing fly ash on a continuous basis.

As discussed above, the treating fluid 20 comprises a sacrificial agent and is any liquid or mixture of liquids, including dissolved solids, that alters the physical or chemical nature of the fly ash by reacting with a component of the fly ash or being deposited upon the surface of the fly ash particles.

A sacrificial agent is a chemical composition that readily bonds to free carbon within the fly ash material and thereby reduces the carbon activity of the fly ash. The purpose of the sacrificial agent is to react with unreacted carbon within the fly ash and to neutralize the carbon with respect to any surfactant added in a later concrete-making process. It is desired that the sacrificial agent has minimal impact upon the air entrainment characteristics of a resulting concrete mixture. Therefore, the sacrificial agent is preferably not a strong surfactant The sacrificial agent, on its own, does not appreciably reduce the interfacial tension between water and solid particles within the concrete.

The sacrificial agent is preferably a weak surfactant such as an aromatic organic compound bearing one or more sulfonate, carboxylate or amino group, and combinations of such groups, a glycol or glycol derivative adjunct having molecular weights of about 2000 Da or less, and any combination thereof. More preferably, the sacrificial agent is benzylamine, sodium 1-naphthoate, sodium 2-naphthalene sulfonate, sodium di-butyl naphthalene sulfonate, ethylene glycol phenyl ether, ethylene glycol methyl ether, butoxyethanol, di-ethylene glycol butyl ether, di-propylene glycol methyl ether, polyethylene glycol,1-phenyl 2-propylene glycol, or a combination thereof. A combination of ethylene glycol phenyl ether and sodium di-isopropyl naphthalene sulfonate is particularly preferred, wherein the relative proportion of the ethylene glycol phenyl ether and the sodium di-isopropyl naphthalene sulfonate may vary in weight ratio from 1:5 to 50:1, and preferably about 1:1 to 20:1.

The preferred amounts of sacrificial agent components, and the preferred ratio of one to another, will vary with the carbon content (LOI) of the fly ash being treated. In general, fly ash with a high carbon content requires addition of a greater amount of sacrificial agent to effectively neutralize the carbon. Typically, the amount of sacrificial agent added if from 0.001 wt% to 1 wt%.

By way of example, fly ash having a carbon content from 0.1 wt% to 10.0 wt% may be treated with ethylene glycol phenyl ether in the amounts of 0.050 pounds/100 pounds (0.023/45.4 kg) of ash to 0.500 pounds/100 pounds (0.227/45.4 kg) of ash, respectively Preferably, fly ash having a carbon content from 0.1 wt% to 6.0 wt% may be treated with ethylene glycol phenyl ether in the amounts of 0.050 pounds/100 pounds (0,023/45,4 kg) of ash to 0.300 pounds/100 pounds (0,136/45,4 kg) of ash, respectively. Fly ash may be treated with less than the desired amount of sacrificial agent with the understanding that some unreacted carbon may remain in the fly ash. Use of greater than the desired amount of sacrificial agent provides no detriment to the resulting fly ash but wastes excess sacrificial agent material. If used, the mild surfactant sodium di-isopropyl naphthalene sulfonate is preferably supplied to fly ash having a carbon content of 0.1 wt% to 5.0 wt% in the amount of 0.006 pounds/100 pounds (0,003/45,4 kg) ash to 0.015 pounds/100 pounds (0,007/45,4 kg) ash, respectively.

Strong surfactants may be dispersed into the fly ash. Surfactants are typically added to concrete batches by concrete producers. However, according to an embodiment of the invention, surfactants are mixed with the fly ash in order to modify the air entrainment characteristics of concrete comprising the treated fly ash. The invention embodies the application of anionic, nonionic, and cationic surfactants including but not limited to stearic acid, palmitic acid, behenic acid, capric acid, caproic acid, caprylic acid, castor oil, cetyl alcohol, cetyl stearyl alcohol, coconut fatty acid, erucic acid, hydrogenated castor oil, lauric acid, myristic acid, oleic acid (red oil), palm kernel fatty acid, stearyl alcohol, tall oil fatty acid, triple pressed stearic acid (55% palmitic acid), and glycerine.

Coating compounds, such as coupling agents, may be dispersed into the fly ash. The coating compounds are typically mixed with the fly ash in order to ready the ash for use as a filler in plastics. Exemplary compounds that may be used as coupling agents include stearic acid, stearate salts, aminosilanes, chlorosilanes, amidosilanes, vinyl silanes, and organotitanates. Each of these components can be dispersed as a liquid solution.

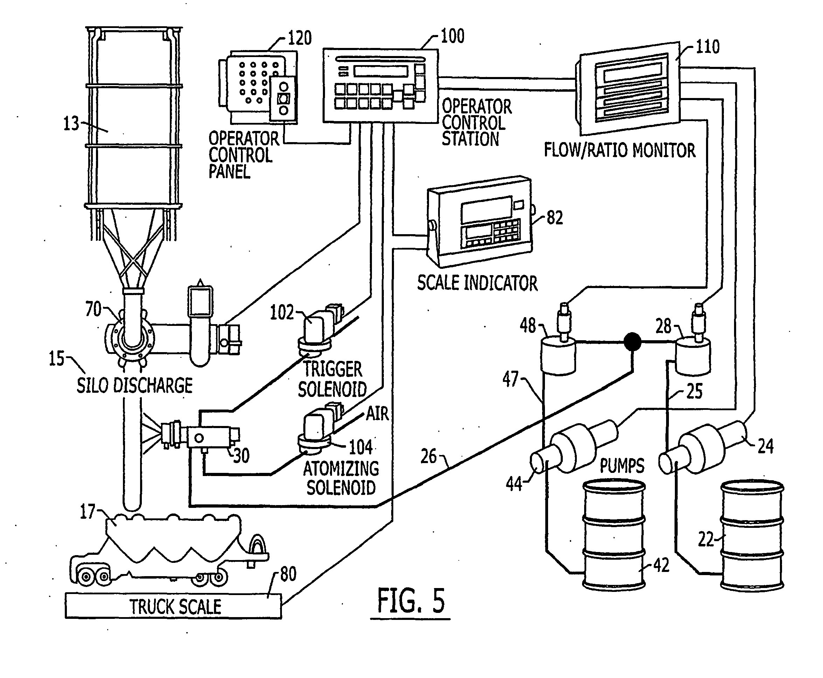

Referring to Figure 5, an alternative embodiment of the invention is shown in relation to a fly ash storage silo 13 positioned for discharge into a mobile container 17. The example is provided with the particular description of a sacrificial agent having glycol and sulfonate components as the treatment fluid for exemplary purposes.

According to this embodiment, the operational parameters of the fly ash treatment system sure controlled by an automated controller such as a programmable operator control station (OCS) capable of monitoring several inputs and of simultaneously controlling several outputs. An exemplary OCS is the Mini OCS^{™} available from GE Fanuc, Charlottesville, Virginia.

The OCS 100 is operationally connected to the silo discharge valve 70, a glycol supply pump 24 and sulfonate supply pump 44. The OCS 100 is also operationally connected to the mobile container scale 80 through a scale indicator 82. Once information concerning the fly ash carbon content is manually entered into the OCS 100, the OCS is capable of automatically opening the silo discharge valve 70 and operating the glycol supply pump 24 and sulfonate supply pump 44 in order to supply proper amounts of, and a proper ratio of, treating fluid. By monitoring the rate of weight change indicated by the scale indicator 82, the OCS 100 may adjust the pump speeds 24, 44 depending upon the measured flow rate of fly ash into the mobile container 17. In addition, the OCS 100 may automatically close the silo discharge valve 70 when the weight of the mobile container 17 nears its maximum capacity, or the silo discharge valve 70 may be closed manually.

Glycol is supplied to the pump 24 from a glycol supply 22, and sulfonate is supplied to the pump 44 from a sulfonate supply 42. The output of both pumps 24 and 44 is combined into the treating fluid feed line 26. Fluid from the treating fluid feed line 26 is introduced to the silo discharge 15 through one or more discharge nozzles 30. The discharge nozzle 30 preferably distributes the treating fluid into the silo discharge 15 as a well-dispersed spray or mist.

An exemplary spray nozzle with excellent dispersion characteristics is an automatic air atomizing spray nozzle such as model 1/4JAU, available from Spring Systems Co., Wheaton, Illinois. The automatic air atomizing spray nozzle operates by passing a continuous stream of high pressure air through the nozzle body. The treating fluid from feed line 26 is atomized upon mixing with the stream of high pressure air and flows into the silo discharge 15 as a well-dispersed mist. The spray nozzle has a pin-type trigger device which may rapidly open or close the treating fluid feed into the air stream. Both the air stream and the pin trigger may be controlled by the OCS 100 through flow control devices 104 and 102, respectively.

The system preferably uses at least two discharge nozzles 30 although any combination of nozzles could be used. According to one preferred arrangement of the nozzles 30, the nozzles 30 are disposed through the wall of the silo discharge 15 such that the nozzles 30 are positioned to oppose one another around the periphery of the silo discharge 15. Each of the nozzles is angled slightly towards the downstream direction of the discharge 15. Use of more than one nozzle 30 provides increased mixing of the treating fluid 26 and the fly ash. The nozzles are angled downstream so that the flowing fly ash does not easily enter and clog the nozzles, and so that fly ash is not projected by the air stream of one nozzle directly across the discharge 15 and into the outlet of an opposing nozzle 30.

For control of treating fluid supply, the OCS 100 controls pumps 24 and 44 by operating the pumps as speeds correlating to previously calculated fluid flow rates. Alternatively, the OCS 100 may more accurately control the flow of glycol 20 and sulfonate 40 through use of a flow/ratio monitor 110, and flow meters 28 and 48. As shown, a flow/ratio monitor 110 is operationally connected to the OCS 100. The OCS 100 provides target flow rates to the flow/ratio monitor 110. The flow/ratio monitor 110, in turn, continuously adjusts the pump 24, 44 speeds while monitoring the glycol flow meter 28, which is in line with the glycol supply line 25, and monitoring the sulfonate flow meter 48, which is in line with the sulfonate supply line 47. By independently adjusting the speeds of pumps 24 and 44, the flow/ratio monitor 110 ensures the proper total supply of treating fluid and the proper ratio of glycol 22 to sulfonate 42.

The sequence of operation may advantageously be controlled by controller 100 as described in detail below.

To begin the treating process, an operator positions a mobile container 17 upon the truck scale 80 and actuates a switch on the operator control panel 120, indicating that the operator desires operation of the system. The operator control panel 120 is operatively connected to the OCS 100. The OCS 100 is preprogrammed with the carbon content information of the fly ash contained in the silo 13. After the operator control panel 120 is actuated by the operator, treatment of the fly ash is completely automated by the OCS 100.

The OCS 100 prepares for treatment by opening the air flow control device 104 in order to allow air to freely flow through the discharge nozzle 30. The flow of high pressure air dislodges any residual fly ash which may have been lodged within the discharge nozzle 30 and provides a ready stream for dispersing the treatment liquid once the treatment liquid is supplied by the discharge nozzle 30.

The OCS 100 next signals the operation of glycol pump 24 and sulfonate pump 44, either directly or indirectly through a flow/ratio monitor 110. Based upon the programmed carbon content of the fly ash, the OCS 100 will determine the optimum pump speeds for glycol pump 24 and sulfonate pump 44 to result in the proper flow rate and composition of the treating fluid. If a flow/ratio monitor 110 is used with the system, the OCS 100 will determine the optimum pump speeds for the pumps 24, 44 and provide the desired speeds to the flow/ratio monitor 110 for control of the pumps.

The OCS 100 opens the silo discharge valve 70 which allows fly ash to freely flow from the silo through the silo discharge 15. After a brief delay the OCS 100 actuates the treatment fluid flow control device 102 in order to allow the treating fluid to be injected into the discharge nozzle 30 and carried by the air stream into the silo discharge 15. Discharge of the treating fluid is delayed momentarily after opening the silo discharge valve 70 so as not to waste treatment fluid before the flowing fly ash reaches the discharge nozzle 30.

By monitoring the scale 80 and scale indicator 82, the OCS 100 determines the rate of weight change of the mobile container 17, and thereby the flow rate of the flowing fly ash. Based on the flow rate, the OCS 100 adjusts the speeds of the glycol pump 24 and the sulfonate pump 44 to maintain the proper ratio and flow rate of the treating fluid. The true flow rates of glycol 22 and sulfonate 42 may be continuously monitored by glycol flow meter 28 and sulfonate flow meter 48, respectively. If the actual flow rates differ from the desired value, pump speeds are adjusted accordingly by the flow/ratio monitor 110.

The scale indicator 82 will indicate when the mobile container 17 is nearing its maximum weight capacity. When the mobile container 17 is close to maximum capacity, the silo discharge valve 70 is closed and the OCS 100 closes the treating fluid flow control device 102. Upon completion of the loading cycle, the OCS 100 may automatically power down the glycol pump 24 and sulfonate pump 44, and close the air flow control device 104 and the treatment fluid flow control device 102. Alternatively, the operator may close the silo discharge valve 70 at any point during operation. Upon sensing the closure of the discharge valve 70, the OCS 100 may be programmed to power down the pumps 24, 44 and close the air flow control device 104 and the treatment fluid flow control device 102.

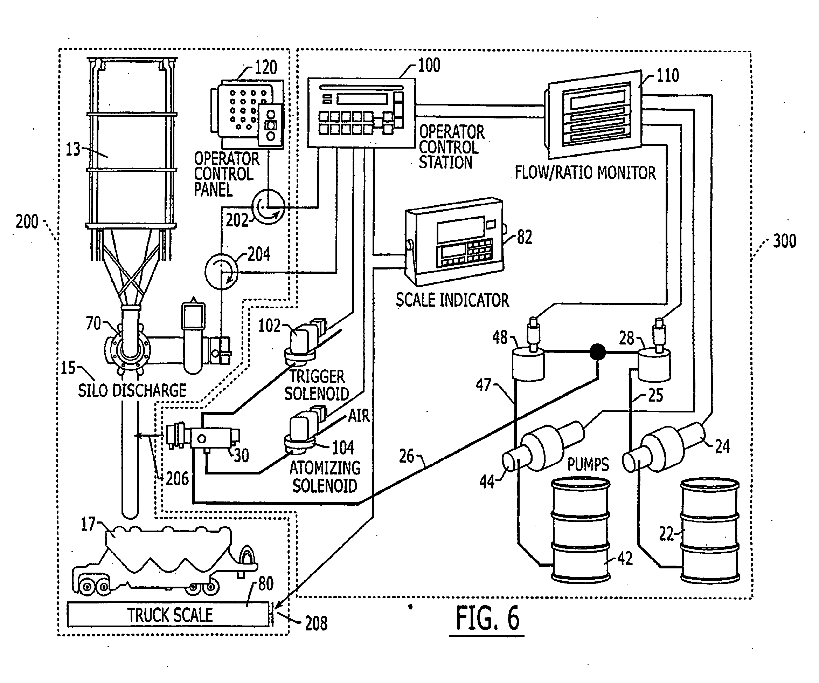

Referring to Figure 6, according to an embodiment of the invention, the fly ash treatment system may be supplied as a stand alone, and even portable, system that is readily attachable to a preexisting fly ash storage system. The typical fly ash storage system comprises a fly ash silo 13 connected to a silo discharge 15 with a silo discharge valve 70 in line with the silo discharge 15. The silo discharge 15 overhangs a scale 80 such that a mobile container 17 may be positioned on the scale 80 to receive fly ash from the outlet of the silo discharge 15. An operator control panel 120 is operatively connected to the silo discharge valve 70 and may or may not be operatively connected to the scale 80 such that the operator control panel 120 opens the silo discharge valve 70 for a predetermined time or until the truck scale 80 reaches a predetermined weight.

A fly ash treatment system 300 may be easily combined with the preexisting fly ash storage system 200 to result in a complete system such as that shown in Figure 5 and described above.

To combine the treatment system 300 with the fly ash storage system 200, the output of the operator control panel 120 is disconnected from the silo discharge valve 70 and connected to an input to the OCS 100 indicated as connection 202. An output of the OCS 100 is connected to the input of silo discharge valve 70 via connection point 204.

To monitor weight of the mobile container 17, the scale indicator 82 of the system 300 is connected to the truck scale 80 via connection 208. If the preexisting fly ash storage system 200 already comprises a scale indicator 82, then the scale indicator 82 is operatively connected to an input of OCS 100.

One or more discharge nozzles 30 are disposed within the wall of the silo discharge 15. The discharge nozzle 30 may easily be attached through the silo discharge wall according to any manner known in the art. By way of example, an installer may simply bore a hole through the silo discharge wall and fix the spray end of the nozzle 30 within the bored hole.

The ability to install the fly ash treatment system 300 upon a preexisting fly ash storage system 200 minimizes installation costs and time as well as reducing any capital costs associated with modification of the fly ash storage system 200.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of mixing fly ash with a treating fluid, comprising the steps of flowing a stream of fly ash from a first vessel (13) to a mobile container (17); measuring the weight change of the mobile container using a scale (80); determining the flow rate of the fly ash based on the weight change of the mobile container;
providing the measured flow rate of the fly ash to a controller (100);
pressurizing at least one treating fluid comprising a sacrificial agent with a pressurizing apparatus (24, 44) in operative communication with the controller; and
dispersing the pressurized treating fluid into the stream of fly ash at a flow rate corresponding to the determined flow rate of the fly ash to provide the sacrificial agent at a rate of 0.001 wt% to 1 wt% based on the weight of the fly ash.

2. The method of claim 1, wherein the step of flowing comprises conveying fly ash through a conduit (15) in a fluidized flow.

3. The method of claim 1 or 2, wherein the pressurizing apparatus (24, 44) is a pump.

4. The method of claim 3, wherein the degree of pressurization is determined by the pump speed of the pump.

5. The method of any of claims 1-4, wherein the fly ash flows by gravity freefall.

6. The method of any of claims 1-4, wherein the fly ash flows by a pneumatic conveyor.

7. The method of any of claims 1-6, wherein the step of dispersing a treating fluid into the fly ash comprises spraying a liquid treating fluid into the flowing fly ash stream.

8. The method of claim 7, wherein the liquid is atomized.

9. The method of claim 8, wherein the liquid is air atomized.

10. The method of claim 1, wherein the sacrificial agent is an aromatic organic compound bearing at least one functional group selected from the group consisting of sulfonate, carboxylate or amino.

11. The method of claim 1, wherein the sacrificial agent is a glycol or glycol derivative having a molecular weight of about 2000 Da or less.

12. The method of any of claims 1-11, further comprising the step of measuring the original carbon activity of the fly ash;
wherein the dispersing step comprises dispersing a carbon-reactive sacrificial agent into the fly ash in an amount sufficient to reduce the carbon activity of the fly ash to a value that is less then the original carbon activity of the fly ash.

13. The method of claim 12, wherein the step of dispersing a carbon-reactive sacrificial agent into the fly ash comprises dispersing a carbon-reactive sacrificial agent into the fly ash in an amount sufficient to reduce the carbon activity of the fly ash to a predetermined value.

14. The method of any of claims 1-13, wherein said flowing step comprises causing fly ash to flow from a first vessel through a fly ash discharge to a mobile container by opening the discharge valve of a fly ash storage silo and further comprising the step of closing the discharge valve and ceasing the dispersion of treating fluid once a predetermined amount of fly ash has been treated.

15. A fly ash treatment system, comprising
a fluid supply line adapted for attachment to a fly ash transport conduit (15) downstream from a first vessel (13);
a first fluid pressurization apparatus having an outlet in fluid communication with the fluid supply line;
a scale (80) for measuring the weight change of a mobile container (17) that received the flowing fly ash; and
an automated control system in operative communication with the first liquid pressurizing apparatus and the scale (80).

16. The fly ash treatment system of claim 15, wherein the first fluid pressurization apparatus is a pump.

17. The fly ash treatment system of claim 15 or 16, wherein the fluid supply line is connected to the fly ash conduit and communicates with the fly ash conduit through a spray nozzle (30).

18. The fly ash treatment system of claim 17, further comprising a second fluid pressurizing apparatus, wherein the second fluid pressurizing apparatus is in operative communication with the automated control system and the second fluid pressurizing apparatus has an outlet in fluid communication with the fluid supply line.

19. The fly ash treatment system of claim 18, wherein the second fluid pressurizing apparatus is a second pump.

20. The fly ash treatment system of any of claims 15-19, further comprising a fly ash control valve (70) for controlling the flow of fly ash through the fly ash conduit, wherein the fly ash control valve is operatively connected to the automated control system (100).

21. The fly ash treatment system of any of claims 15-20, wherein the scale (80) is in operative connection with a scale indicator.

22. The fly ash treatment system of any of claims 15-21, wherein the fly ash transport conduit is provided within a fly ash storage silo.

## Patentansprüche

1. Verfahren des Mischens von Flugasche mit einer behandelnden Flüssigkeit, umfassend die Schritte Fließen von Flugasche aus einem ersten Behälter (13) in einen fahrbaren Behälter (17); Messen der Gewichtsänderung des fahrbaren Behälters mit Hilfe einer Waage (80); Bestimmen der Fließgeschwindigkeit der Flugasche auf der Basis der Gewichtsänderung des fahrbaren Behälters;
Bereitstellen der gemessenen Fließgeschwindigkeit der
Flugasche einer Steuereinheit (100); Druckbeaufschlagen zumindest einer behandelnden Flüssigkeit, die ein Opferagens umfasst mit einer Druckvorrichtung (24, 44) in Wirkverbindung mit der Steuereinheit; und Verteilen der unter Druck stehenden
behandelnden Flüssigkeit in den Strom von Flugasche bei einer Durchflussmenge entsprechend der ermittelten Durchflussmenge der Flugasche, um das Opferagens in einer Menge von 0,001 Gew.-% bis 1 Gew.-% bezogen auf das Gewicht der Flugasche bereitzustellen.

2. Verfahren nach Anspruch 1, wobei der Schritt des Fließens das Bewegen von Flugasche durch eine Leitung (15) in dynamischer Strömung umfasst.

3. Verfahren nach Anspruch 1 oder 2, wobei die Druckvorrichtung (24, 44) eine Pumpe ist.

4. Verfahren nach Anspruch 3, wobei das Maß der Druckbeaufschlagung durch die Drehzahl der Pumpe bestimmt wird.

5. Verfahren nach einem der Ansprüche 1-4, wobei die Flugasche aufgrund des durch Schwerkraft verursachten freien Falls fließt.

6. Verfahren nach einem der Ansprüche 1-4, wobei die Flugasche aufgrund einer pneumatischen Förderanlage fließt.

7. Verfahren nach einem der Ansprüche 1-6, wobei der Schritt des Verteilens einer behandelnden Flüssigkeit in die Flugasche Versprühen einer flüssigen behandelnden Flüssigkeit in einen fließenden Strom von Flugasche umfasst.

8. Verfahren nach Anspruch 7, wobei die Flüssigkeit atomisiert ist.

9. Verfahren nach Anspruch 8, wobei die Flüssigkeit mit Luft zerstäubt ist.

10. Verfahren nach Anspruch 1, wobei das Opferagens eine aromatische organische Verbindung ist, die mindestens eine funktionelle Gruppe, ausgewählt aus der Gruppe bestehend aus Sulfonat, Carboxylat oder Amino enthält.

11. Verfahren nach Anspruch 1, wobei das Opferagens ein Glykol oder ein Glykolderivat mit einem Molekulargewicht von ca. 2000 Da oder weniger ist.

12. Verfahren nach einem der Ansprüche 1-11, weiter umfassend den Schritt des Messens der ursprünglichen Kohlenstoffaktivität der Flugasche;
wobei der Schritt des Verteilens Verteilen eines mit Kohlenstoff reaktiven Opferagens in die Flugasche in ausreichender Menge umfasst, um die Kohlenstoffaktivität der Flugasche auf einen Wert zu senken, der unterhalb der ursprünglichen Kohlenstoffaktivität der Flugasche liegt.

13. Verfahren nach Anspruch 12, wobei der Schritt des Verteilens eines mit Kohlenstoff reaktiven Opferagens in der Flugasche Verteilen eines mit Kohlenstoff reaktiven Opferagens in die Flugasche in einer ausreichenden Menge umfasst, um die Kohlenstoffaktivität der Flugasche auf einen vorbestimmten Wert zu senken.

14. Verfahren nach einem der Ansprüche 1-13, wobei der Schritt des Fließens Bewirken des Fließens von Flugasche von einem ersten Gefäß durch einen Flugascheauslass in einen fahrbaren Behälter durch Öffnen des Auslassventils eines Flugaschelagersilos umfasst und weiter den Schritt des Schließens des Auslassventils und des Beendens der Verteilung der behandelnden Flüssigkeit umfasst, sobald eine vorgegebene Menge an Flugasche behandelt worden ist.

15. Ein System zur Behandlung von Flugasche, umfassend
eine Flüssigkeitszuleitung, die zur Befestigung an einer Transportleitung (15) unterhalb eines ersten Gefäßes (13) angepasst ist;
eine erste Vorrichtung zur Druckbeaufschlagung einer Flüssigkeit mit einem Auslass in Fluidverbindung mit der Flüssigkeitszuleitung;
eine Waage (80) zum Messen der Änderung des Gewichts eines fahrbaren Behälters (17), der die fließende Flugasche empfing; und
eine automatisierte Steuereinheit in Wirkverbindung mit der ersten Vorrichtung zur Druckbeaufschlagung einer Flüssigkeit und der Waage (80).

16. System zur Behandlung von Flugasche nach Anspruch 15, wobei die erste Vorrichtung zur Druckbeaufschlagung einer Flüssigkeit eine Pumpe ist.

17. System zur Behandlung von Flugasche nach Anspruch 15 oder 16, wobei die Flüssigkeitszuleitung mit der Flugascheleitung verbunden ist und mit der Flugascheleitung über eine Sprühdüse (30) kommuniziert.

18. System zur Behandlung von Flugasche nach Anspruch 17, weiter umfassend eine zweite Vorrichtung zur Druckbeaufschlagung einer Flüssigkeit, wobei die zweite Vorrichtung zur Druckbeaufschlagung einer Flüssigkeit in Wirkverbindung mit der automatisierten Steuereinheit steht, und die zweite Vorrichtung zur Druckbeaufschlagung einer Flüssigkeit einen Auslass in Fluidverbindung mit der Flüssigkeitszuleitung aufweist.

19. System zur Behandlung von Flugasche nach Anspruch 18, wobei die zweite Vorrichtung zur Druckbeaufschlagung einer Flüssigkeit eine zweite Pumpe ist.

20. System zur Behandlung von Flugasche nach einem der Ansprüche 15-19, weiter umfassend ein Flugaschesteuerventil (70) zum Steuern des Flusses der Flugasche durch die Flugascheleitung, wobei das Flugaschesteuerventil in Wirkverbindung mit der automatisierten Steuereinheit (100) steht.

21. System zur Behandlung von Flugasche nach einem der Ansprüche 15-20, wobei die Waage (80) in Wirkverbindung mit einer Gewichtsanzeige steht.

22. System zur Behandlung von Flugasche nach einem der Ansprüche 15-21, wobei die Leitung zum Transport der Flugasche innerhalb eines Silos zur Lagerung von Flugasche bereitgestellt wird.

## Revendications

1. Procédé de mélange des cendres volantes avec un fluide de traitement, comprenant les étapes consistant à faire circuler un flux de cendres volantes depuis une première cuve (13) vers un récipient mobile (17);
à mesurer le changement de poids du récipient mobile en utilisant une échelle (80);
à déterminer le débit des cendres volantes en se basant sur le changement de poids du récipient mobile ;
à fournir le débit mesuré des cendres volantes à un contrôleur (100);
à mettre sous pression au moins un fluide de traitement comprenant un agent sacrificiel à l'aide d'un appareil de mise sous pression (24, 44) en communication opérationnelle avec le contrôleur; et
à disperser le fluide de traitement sous pression dans le flux de cendres volantes à un débit correspondant au débit déterminé des cendres volantes pour délivrer l'agent sacrificiel à un débit compris entre 0,001 % en poids et 1 % en poids en se basant sur le poids des cendres volantes.

2. Procédé selon la revendication 1, dans lequel l'étape de circulation comprend l'acheminement de cendres volantes à travers un conduit (15) dans une circulation fluidifiée.

3. Procédé selon la revendication 1 ou 2, dans lequel l'appareil de mise sous pression (24, 44) est une pompe.

4. Procédé selon la revendication 3, dans lequel le degré de mise sous pression est déterminé par la vitesse de pompage de la pompe.

5. Procédé selon l'une quelconque des revendications 1 à 4, dans lequel les cendres volantes circulent sous l'effet de la gravité.

6. Procédé selon l'une quelconque des revendications 1 à 4, dans lequel les cendres volantes circulent grâce à un transporteur pneumatique.

7. Procédé selon l'une quelconque des revendications 1 à 6, dans lequel l'étape de dispersion d'un fluide de traitement dans les cendres volantes comprend la pulvérisation d'un fluide de traitement liquide dans le flux de cendres volantes qui circulent.

8. Procédé selon la revendication 7, dans lequel le liquide est atomisé.

9. Procédé selon la revendication 8, dans lequel le liquide est atomisé dans l'air.

10. Procédé selon la revendication 1, dans lequel l'agent sacrificiel est un composé organique aromatique comportant au moins un groupe fonctionnel sélectionné dans le groupe constitué de sulfonate, de carboxylate ou d'aminé.

11. Procédé selon la revendication 1, dans lequel l'agent sacrificiel est un glycol ou un dérivé de glycol présentant un poids moléculaire d'environ 2000 Da ou inférieur.

12. Procédé selon l'une quelconque des revendications 1 à 11, comprenant en outre l'étape consistant à mesurer l'activité du carbone d'origine des cendres volantes ;
dans lequel l'étape de dispersion comprend la dispersion d'un agent sacrificiel réagissant avec le carbone dans les cendres volantes dans une quantité suffisante pour réduire l'activité du carbone des cendres volantes à une valeur qui est inférieure à celle de l'activité du carbone d'origine des cendres volantes.

13. Procédé selon la revendication 12, dans lequel l'étape de dispersion d'un agent sacrificiel réagissant avec le carbone dans les cendres volantes comprend la dispersion d'un agent sacrificiel réagissant avec le carbone dans les cendres volantes dans une quantité suffisante pour réduire l'activité du carbone des cendres volantes à une valeur prédéterminée.

14. Procédé selon l'une quelconque des revendications 1 à 13, dans lequel ladite étape de circulation consiste à faire circuler les cendres volantes depuis une première cuve à travers une décharge de cendres volantes vers un récipient mobile en ouvrant la vanne de décharge d'un silo de stockage de cendres volantes et comprenant en outre l'étape consistant à fermer la vanne de décharge et à arrêter la dispersion de fluide de traitement une fois qu'une quantité prédéterminée de cendres volantes a été traitée.

15. Système de traitement de cendres volantes, comprenant
un tuyau d'acheminement du fluide conçu pour être fixé à un conduit de transport des cendres volantes (15) en aval d'une première cuve (13) ;
un premier appareil de mise sous pression du fluide présentant une sortie en communication fluidique avec le tuyau d'acheminement du fluide ;
une échelle (80) pour mesurer le changement de poids d'un récipient mobile (17) qui a reçu les cendres volantes qui circulent ; et
un système de commande automatisé en communication opérationnelle avec le premier appareil de mise sous pression du liquide et l'échelle (80).

16. Système de traitement de cendres volantes selon la revendication 15, dans lequel le premier appareil de mise sous pression du fluide est une pompe.

17. Système de traitement de cendres volantes selon la revendication 15 ou 16, dans lequel le tuyau d'acheminement du fluide est relié au conduit de cendres volantes et communique avec le conduit de cendres volantes à travers une buse de pulvérisation (30).

18. Système de traitement de cendres volantes selon la revendication 17, comprenant en outre un deuxième appareil de mise sous pression du fluide, dans lequel le deuxième appareil de mise sous pression du fluide est en communication opérationnelle avec le système de commande automatisé et le deuxième appareil de mise sous pression du fluide présente une sortie en communication fluidique avec le tuyau d'acheminement du fluide.

19. Système de traitement de cendres volantes selon la revendication 18, dans lequel le deuxième appareil de mise sous pression du fluide est une deuxième pompe.

20. Système de traitement de cendres volantes selon l'une quelconque des revendications 15 à 19, comprenant en outre une vanne de commande du débit de cendres volantes (70) pour commander le débit de cendres volantes à travers le conduit de cendres volantes, dans lequel la vanne de commande du débit de cendres volantes est reliée de manière opérationnelle au système de commande automatisé (100).

21. Système de traitement de cendres volantes selon l'une quelconque des revendications 15 à 20, dans lequel l'échelle (80) est en liaison opérationnelle avec un indicateur d'échelle.

22. Système de traitement de cendres volantes selon l'une quelconque des revendications 15 à 21, dans lequel le conduit de transport des cendres volantes est fourni à l'intérieur d'un silo de stockage de cendres volantes.
